# EUROPEAN PATENT SPECIFICATION

(11) **EP 4 586 116 B1**
(45) Date of publication and mention of the grant of the patent: **25.11.2026**
(21) Application number: 24151164.1
(22) Date of filing: 10.01.2024
(51) Int. Cl.: G06F 21/55, G06F 21/75, G06F 21/81

(54) **ELECTRONIC DEVICE WITH FAULT INJECTION ATTACK DETECTION**
ELEKTRONISCHES GERÄT MIT ERKENNUNG VON FAULT INJECTION ANGRIFFEN
DISPOSITIF ÉLECTRONIQUE AVEC DÉTECTION D'ATTAQUE PAR INJECTION D'ERREURS

(43) Date of publication of application: 16.07.2025
(73) Proprietor: NXP B.V., 5656 AG Eindhoven (NL)
(72) Inventor: Perez Chamorro, Jorge Ernesto, 5656 AG Eindhoven (NL); Lentz, Andreas, 5656 AG Eindhoven (NL); Küchler, Wolfgang, 5656 AG Eindhoven (NL)
(74) Representative: Krott, Michel

(56) References cited:
- US-A1- 2018 349 600
- US-A1- 2023 253 779
- KAMAKSHI DIVYA AKELLA ET AL: "A post-silicon hold time closure technique using data-path tunable-buffers for variation-tolerance in sub-threshold designs", 2018 19TH INTERNATIONAL SYMPOSIUM ON QUALITY ELECTRONIC DESIGN (ISQED), IEEE, 13 March 2018 (2018-03-13), pages 341 - 346, XP033339028, [retrieved on 20180509], DOI: 10.1109/ISQED.2018.8357310

## Description

### TECHNICAL FIELD

The present disclosure relates to an electronic device with a detector and an evaluation device. In particular, the electronic device is configured to detect an attack such as a fault injection (FI) attack using the detector and the evaluation device. The disclosure further relates to a method of detecting an FI attack in an electronic device.

The disclosure may hence relate to the technical field of electronic devices, such as integrated circuits, and in particular to the aspect of detecting attacks to such an electronic device.

### TECHNICAL BACKGROUND

Detecting attacks to electronic devices (in particular electronic components) such as processors or integrated circuits (or devices that comprise these components) may still be considered a challenge. For example, a "fault injection (FI) attack" may be an attack of stressing an electronic device in unusual ways. This can be achieved for example using physical- or software-based means or using a hybrid approach. For example, physical fault injections may include the application of high voltages, extreme temperatures, or electromagnetic pulses on electronic components, such as computer memory and central processing units. In an illustrative example, an electromagnetic coil may be moved over an electronic device, thereby inducing pulses in the currents of the electronic device.

Due to the popularity of FI attacks and constant cost reduction of attacking equipment, electronic devices may be constantly challenged to find better and more efficient ways to mitigate and detect cheaper and more sophisticated attacks. Two typical FI attacks in this regard may include power glitching and the electromagnetic FI (see above). Power glitching attacks may be possible even via a logical interface (i.e., software-based), meaning that there is no equipment required to execute them, and barely control of the power configuration of the electronic device is required to abuse the functionality.

US20180349600A1 addresses fault-injection attacks that create timing faults inside an IC using a tamper sensor. It discloses hold-time and setup-time violation detection circuits. A tamper response circuit performs a protection operation when the fault signal indicates tampering.

### SUMMARY OF THE DISCLOSURE

There may be a need to detect a fault injection attack to an electronic device in an efficient and reliable manner. An electronic device and a method are provided.

According to an aspect of the present disclosure, it is described an electronic device (e.g. an integrated circuit), comprising:
i) a detector (e.g. comprising a flip-flop register), configured to detect/monitor a power supply (supply voltage) and/or a clock period (of the electronic device; provided to the detector), and
ii) an evaluation device (e.g. comprising a comparator), coupled to the detector, and configured to evaluate the detection/monitoring result with respect to a timing violation (e.g. a set-up violation and/or a hold violation) caused by a (local or global) (fault injection) attack (to the electronic device).

According to a further aspect of the present disclosure, there is described a method of detecting an attack, in particular a fault injection attack, in particular in a fully digital implementation, the method comprising:
i) monitoring a power supply and/or a clock period; and
ii) evaluating the monitoring result with respect to a timing violation caused by the (fault injection) attack.

In the present context, the term "electronic device" may in particular refer to an electronic component or to a device that comprises such an electronic component. In an example, the electronic device can comprise an integrated circuit (IC) or a processor. In an example, the electronic device can comprise a memory, a central processing unit, a digital circuit, a crypto-engine, or a circuit board.

In the present context, the term "timing violation" may in particular refer to a deviation from a specific/specified timing requirement in an electronic device. Such a timing violation may comprise a mismatch between actual timing behavior and electronic device (design) constraints. Examples for a timing violation may include a set-up violation and a hold violation.

According to an exemplary embodiment, the disclosure may be based on the idea that a fault injection attack to an electronic device may be detected in an efficient and reliable manner, when a detector (e.g. a D flip-flop) monitors a power supply and/or a clock within the electronic device and transfers the monitoring result (voltage signals) to an evaluation device (e.g. a comparator) which detects the attack based on timing violations in the monitoring result. FI attacks may directly affect the power supply and/or the clock of the electronic device, and these effects may be directly detectable based on timing violations.

It has turned out that FI attacks often affect an electronic device only locally, thereby making these attacks difficult to detect. Thus, in a preferred embodiment, a plurality of detectors may be distributed over the electronic device, thereby enabling detection of local FI attacks. In a further preferred embodiment, the plurality of detectors is coupled to a common evaluation device, so that the monitoring results of a plurality of detectors can be used as references for detecting (local) timing violations.

In an embodiment, the described detection approach may allow for a cost-effective solution to find such kind of attacks. The implementation with the detector and the evaluation device (e.g. a flip-flop and a comparator) may have an exceptionally low gate count (in the order of a couple of tens of gate-equivalents). The detection approach may be realized (mostly) digital (no required analogue changes and customizations, depending on the technology), and may have extremely low power consumption (no dynamic activity). Local FI (e.g. EMFI) or global FI (e.g. power glitching) to the power supply may be efficiently and reliably detected. Additionally, due to its digital nature, the described detection approach may be easily integrated into existing electronic devices.

The aspects defined above and further aspects of the disclosure are apparent from the examples of embodiment to be described hereinafter and are explained with reference to these examples of embodiment. The disclosure will be described in more detail hereinafter with reference to examples of embodiment but to which the disclosure is not limited.

### EXEMPLARY EMBODIMENTS

According to an embodiment, the detector is configured to detect a set-up violation as the timing violation. The term "set-up violation" may refer to a known timing violation, e.g. when an input signal to a register (like a flip-flop or latch) is not stable for a sufficient duration before the arrival of the clock edge.

According to an embodiment, the set-up violation comprises (is caused by) at least one of: a global under-voltage, a local under-voltage, a clock glitch. Thus, the negative effects of an **FI** attack may be measured via the set-up violation.

According to an embodiment, the electronic device comprises a long delay functionality (in particular a long delay block/element/component) to introduce a long delay for detecting the set-up violation. Thereby, detection of the set-up violation may be improved.

According to an embodiment, the detector is configured to detect a hold violation as the timing violation. The term "hold violation" may refer to a known timing violation, e.g. when an input signal to a register (like a flip-flop or latch) does not remain stable for a required duration after the clock edge.

According to an embodiment, the hold violation comprises at least one of a global over-voltage, a local over-voltage. Thus, the negative effects of an **FI** attack may be measured via the hold violation.

According to an embodiment, the electronic device comprises a short delay functionality (in particular a short delay block/element/component) to introduce a short delay for detecting the hold violation. Thereby, detection of the hold violation may be improved.

According to an embodiment, the evaluation device is configured to compare the short delay voltage signal (VDET3) to a static signal. **In** this manner, a further signal (e.g. VDET4) may not be necessary, thereby saving efforts.

According to an embodiment, the detector comprises a register unit for monitoring, According to an embodiment, the register unit is coupled to the long delay functionality and/or the short delay functionality. The term "register" may refer in particular to a quickly accessible location available to an integrated circuit or processor. A register can be implemented for example with a flip-flop. A flip-flop may be a circuit that can have two stable states that can store state information (a bistable multivibrator). The circuit can be made to change state by signals applied to one or more control inputs and can output its state. Flip-flops may be seen as fundamental building blocks of electronical systems.

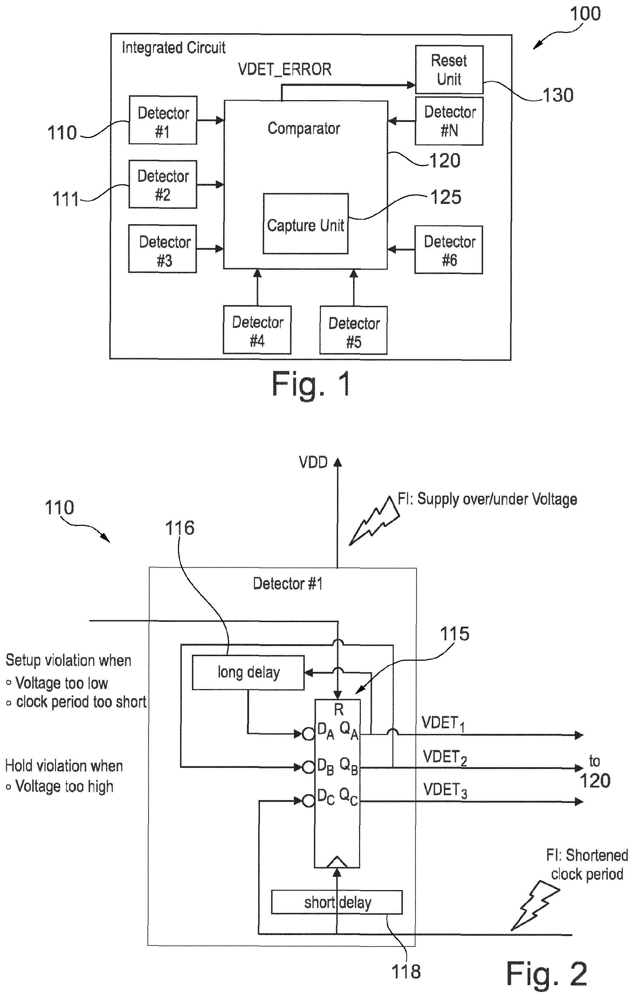

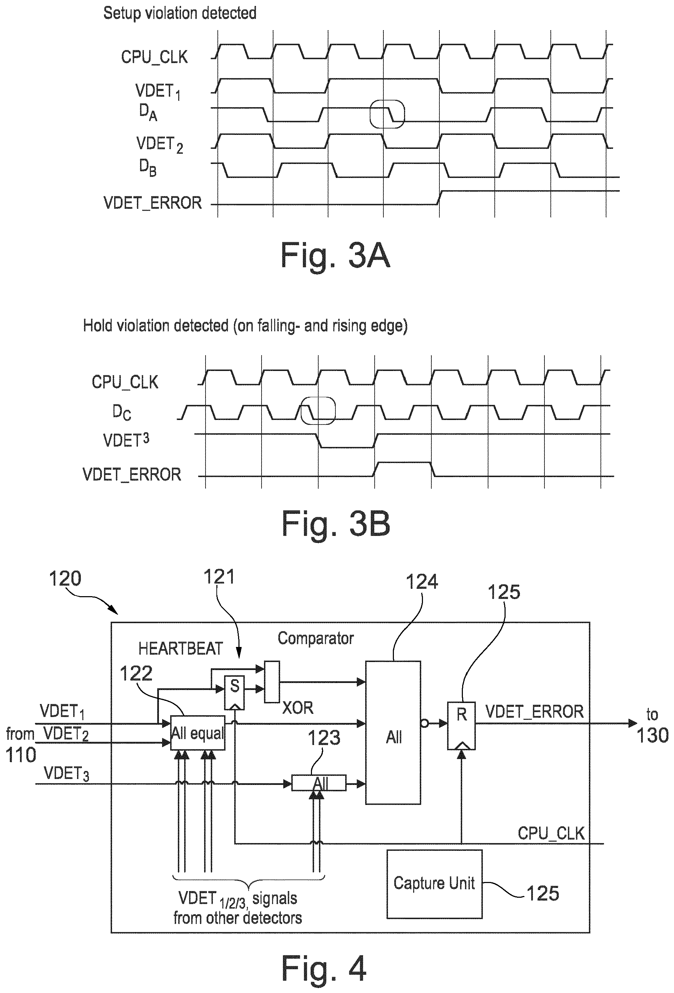

According to an embodiment, the register unit comprises a D (data or delay)-flip-flop. Thereby, the register unit may be implemented in a straightforward manner with an established electronic element. The D flip-flop may capture the value of the D-input at a definite portion of a clock cycle (such as the rising edge of the clock). That captured value becomes the Q output. At other times, the output Q may not change (compare Figures 2 and 3).

According to an embodiment, the detector is a first detector, and the electronic device further comprises: a second detector coupled to the evaluation device. According to an embodiment, the first detector is spatially separated from the second detector. According to an embodiment, the electronic device comprises a plurality of detectors. According to an embodiment, the plurality of detectors are spatially separated from each other, for example homogenously or inhomogenously distributed over the electronic device. Since FI attacks are often only local with respect to an electronic device, the performance of the detection may be significantly improved, when distributing (and electrically coupling) a plurality of detectors over the electronic device.

According to an embodiment, the electronic device comprises five or more, in particular ten or more, detectors. Depending on the size (area) and density of the electronic device, a specific number of detectors may be especially advantageous. If most areas of the electronic device are covered by the monitoring, a reliable attack detection may be enabled. In an exemplary embodiment, in an area of 1 mm², four to eight detectors may be arranged.

According to an embodiment, the detectors are in particular arranged at/near important areas of the electronic device, e.g. the central processing unit. In an example, security-relevant applications (e.g. a crypto-engine, a secure element) may be especially protected (by sufficient detectors) against FI attacks. For example, one to four detectors may be arranged around such a security-relevant component.

According to an embodiment, the evaluation device is configured to: compare the monitoring result of the first detector and the monitoring result of the second detector, so that the first detector is used as a reference for the second detector or vice versa. According to an embodiment, a plurality of monitoring results (e.g. five or more) are compared with each other. Thereby, the monitoring results of the detectors can be used as references among each other, and no additional references would be required. Thus, time and efforts may be saved. In case of a local attack, only one of the monitoring results will show an error, while the others behave as normal.

According to an embodiment, the electronic device further comprising: a clock device, configured to provide a clock to the detector. In this manner, the clock period may be efficiently checked. According to an embodiment, the electronic device is configured as an integrated circuit (IC), thereby enabling an economically important application.

According to an embodiment, the evaluation device comprises a comparator. This may enable a straightforward and cost-efficient implementation. Using a comparator, monitoring results from different detectors may be easily compared.

According to an embodiment, the electronic device comprises a determination unit, configured to analyze an evaluation result of the evaluation unit, and to determine the localization of the fault injection attack in the electronic device. For example, the determination unit may be configured to select the detector from which the error signal came. If said detector is known, a corresponding area in the electronic device can be identified.

According to an embodiment, an FI attack may be rooted back to either a set-up time or hold time violation. If the set-up time is violated, data will not be captured properly at the next clock edge. Similarly, if hold time is violated, data intended to get captured at the next edge will get captured at the same edge. Either or a mix of both over a subset of the registers in an electronic device cause it to malfunction, inducing an unspecified or unexpected state that may bring security vulnerabilities. The electronic device described here may be specialized in detecting set-up violations and/or hold violations.

### BRIEF DESCRIPTION OF THE DRAWINGS

Figure 1 illustrates an electronic device with a plurality of detectors coupled to a common evaluation device, according to an exemplary embodiment of the disclosure.
Figure 2 illustrates a detector with a flip-flop register, according to an exemplary embodiment of the disclosure.
Figure 3A schematically illustrates detection of a set-up violation, according to an exemplary embodiment of the disclosure.
Figure 3B schematically illustrates detection of a hold violation, according to an exemplary embodiment of the disclosure.
Figure 4 illustrates an evaluation device with a comparator, according to an exemplary embodiment of the disclosure.

### DETAILED DESCRIPTION OF THE DRAWINGS

Before referring to the drawings, embodiments will be described in further detail, some basic considerations will be summarized based on which embodiments of the disclosure have been developed.

According to an exemplary embodiment, the disclosure may refer to a set-up and hold violation detector that adds a meaningful layer of security protection against fault-injection (FI) attacks, particularly glitch and electro-magnetic FI (EMFI). FI-detection may be achieved by an arrangement of distributed detectors/sensors that specialize in detecting timing violations in a straight-forward manner. One of the main advantages of the disclosure, when compared to well-known sensing concepts against e.g. glitches, is that it may be physically placed within the boundaries of an architecture that cannot or does not wish to be modified. Besides, due to its very low gate count and power consumption, it may be instantiated several times, therefore providing greater coverage to highly localized attacks.

According to an exemplary embodiment, most known detectors focus on detecting glitches by monitoring sudden power drops at the power supply, or by checking for high or low frequency edges observed over a clock. They, however, rely on observations that require additional references and need a single observation point at the source of the power or clock, respectively. Besides, they require trimmings (cannot be enabled out of reset) and require large gate counts and power consumption (multiple toggling elements inside).

In contrast, the described detection approach may address the source of the fault injection which is due to either set-up or hold time violations. It may not include toggling elements, therefore its power consumption may be minimal. It may further not require large gate-counts, therefore it may be easily multiplied and distributed over all sensitive parts of an electronic device, e.g. system-on-chip. Its principle of detection is straight forward and may not require references, therefore may not require any kind of trimmings, and may be enabled immediately after power-on of the electronic device.

**Figure** 1 shows an electronic device 100 with a plurality of detectors 110, 111 coupled to a common evaluation device 120, according to an exemplary embodiment of the disclosure. In this example, the electronic device 100 is configured as an integrated circuit (IC) and comprises the plurality of the detectors, including a first detector 110 and a second detector 111. Each detector 110 is configured to monitor a power supply and/or a clock period within the electronic device 100. Each detector 110, 111 is connected to the evaluation device 120 that is configured to evaluate the monitoring results of the detectors 110, 111 with respect to a timing violation caused by a fault injection attack. The detectors 110, 111 are spatially separated from each other and distributed over the whole electronic device 100 (as can be seen in this planar view). Thereby, local FI attacks can be detected especially efficient, in particular without further references.

The evaluation device 120 comprises in this example a comparator to compare the monitoring results from the detectors 110, 111. Further, the evaluation device 120 comprises a capture unit 125 (see also Figure 4) to determine the localization of the FI attack in the electronic device 120 (logging the source of the detection). The electronic device 100 also comprises a reset unit 130, coupled to the evaluation device 120, and configured to reset the electronic device 100 (initiating a reboot of the IC), in case that an FI attack is determined (here illustrated by the VDET_ERROR signal).

**Figure** 2 illustrates an implementation of the detector 110, according to an exemplary embodiment of the disclosure. The detector 110 comprises a register unit 115, realized as a D flip-flop. The register unit 115 receives a power supply VDD and a clock within the electronic device 100. It is schematically illustrated with arrows that the FI attack can affect the supply voltage and/or the clock period.

In order to detect the timing violation efficiently, the detector 110 comprises a long delay functionality/block 116, coupled to the register unit 115, and a short delay functionality/block 118, also coupled to the register unit 115. Regarding the long delay, two voltage signals VDET_1 and VDET_2 are monitored and sent to the evaluation device 120. These voltage signals are in particular relevant for a set-up violation such as "voltage too low" or "clock period too short". With respect to the short delay, one voltage signal VDET_3 is sent to the evaluation device 120. This voltage signal is in particular relevant for a hold violation such as "voltage too high".

The long delay can be chosen such, that the set-up time is minimal in the slowest corner. The short delay in the clock path forces BE tools to add just enough delays in the data paths to avoid hold violations for all corners. No explicit short delay may be needed, as there can be a hold requirement of the flip-flop itself.

The set-up violation detection logic may be configured to detect global/local under-voltages on the supply and/or clock glitches. The state is signaled via VDET_1 and VDET_2. The hold violation detection logic may be configured to detect global/local over-voltages on the supply. The state is signaled via VDET_3.

**Figure 3A** schematically illustrates detection of a set-up violation, according to an exemplary embodiment of the disclosure. The signals VDET_1 and VDET_2 are output Q by the register unit 115 of the detector 110. A comparison with the input D to the register unit 115 yields detection of a timing violation (indicated in Figure 3A) that leads to the VDET_ERROR signal.

**Figure 3B** schematically illustrates detection of a hold violation, according to an exemplary embodiment of the disclosure. The signal VDET_3 is output Q by the register unit 115 of the detector 110. A comparison with the input D to the register unit 115 yields detection of a timing violation (indicated in Figure 3B) that leads to the VDET_ERROR signal.

**Figure** 4 illustrates an evaluation device 120 with a comparator, according to an exemplary embodiment of the disclosure. The comparator comprises a heartbeat checker functionality to check that no detector is stuck. This functionality can be implemented for each detector. The comparator further comprises a set-up violation comparator 122 (e.g. comparing the VDET_1 and VDET_2 signals from all detectors) and a hold violation comparator 123 (e.g. comparing the VDET_3 signal from all detectors). In a combined comparator 124, all signals from the detectors can be compared. Based on the evaluation result, an error signal VDET_ERROR can be generated (at reference sign 126). As shown in Figure 1, the error signal can be sent to the reset unit 130 to reboot/reset (at least part of) the electronic device 100. Further, the capture unit 125 (or determination unit) can log the source of the detection to identify the specific localization of the FI attack in the electronic device 100. In a specific example, the detectors act as reference for themselves and each other for the set-up check, while the expected value for the hold check is a priori known.

## Claims

1. An electronic device (100), comprising:
a detector (110), configured to monitor a power supply and a clock period within the electronic device (100),
wherein the detector (110) is configured to detect a set-up violation as a timing violation, wherein the detector (110) is configured to detect a hold violation as the timing violation, and wherein the detector (110) comprises a register unit (115) for the monitoring;
an evaluation device (120), coupled to the detector (110), and configured to evaluate the monitoring result with respect to a timing violation caused by an attack;
a long delay functionality (116) to introduce a long delay for detecting the set-up violation; and
a short delay functionality (118) to introduce a short delay for detecting the hold violation;
wherein the register unit (115) is coupled to the long delay functionality (116) and the short delay functionality (118).

2. The electronic device (100) according to claim 1, wherein the set-up violation comprises at least one of:
a global under-voltage,
a local under-voltage,
a clock glitch.

3. The electronic device (100) according to claim 1, wherein the hold violation comprises at least one of:
a global over-voltage,
a local over-voltage.

4. The electronic device (100) according to claim 1,
wherein the register unit (115) comprises a D-flip-flop.

5. The electronic device (100) according to one of the preceding claims,
wherein the detector (110) is a first detector (110), and wherein the electronic device (100) further comprises:
a second detector (111) coupled to the evaluation device (120);
wherein the first detector (110) is spatially separated from the second detector (111).

6. The electronic device (100) according to claim 5, wherein the evaluation device (120) is configured to:
compare the monitoring result of the first detector (110) and the monitoring result of the second detector (111), so that the first detector (110) is used as a reference for the second detector **(111)** or vice versa.

7. The electronic device (100) according to one of the preceding claims,
wherein the electronic device (100) comprises three or more detectors (110, 111).

8. The electronic device (100) according to one of the preceding claims,
wherein the evaluation device (120) comprises a comparator (124).

9. The electronic device (100) according to one of the preceding claims, comprising:
a determination unit (125), configured to device analyze an evaluation result of the evaluation device (120), and
determine the localization of the attack in the electronic device (100).

10. A method of detecting a fault injection, FI, attack, performed by an electronic device (100) according to one of the preceding claims, the method comprising:
monitoring the power supply and the clock period within the electronic device (100);
detecting, via a detector (110) and using a register unit (115), a set-up violation as a timing violation; introducing a long delay for detecting the set-up violation;
detecting, via a detector (110) and using the register unit (115), a hold violation as the timing violation; introducing a short delay for detecting the hold violation;
and
evaluating by an evaluation device (120) coupled to the detector (110), the monitoring result with respect to the timing violation caused by the attack.

## Patentansprüche

1. Elektronische Vorrichtung (100), umfassend:
einen Detektor (110), der dazu ausgelegt ist, eine Leistungsversorgung und eine Taktperiode innerhalb der elektronischen Vorrichtung (100) zu überwachen,
wobei der Detektor (110) dazu ausgelegt ist, eine Einrichtungsverletzung als eine Timing-Verletzung zu detektieren,
wobei der Detektor (110) dazu ausgelegt ist, eine Halteverletzung als die Timing-Verletzung zu detektieren, und
wobei der Detektor (110) eine Registereinheit (115) für die Überwachung umfasst;
eine Evaluierungsvorrichtung (120), die mit dem Detektor (110) gekoppelt ist und dazu ausgelegt ist, das Überwachungsergebnis in Bezug auf eine durch einen Angriff verursachte Timing-Verletzung zu evaluieren;
eine Langverzögerungsfunktionalität (116) zum Einführen einer langen Verzögerung zum Detektieren der Einrichtungsverletzung; und
eine Kurzverzögerungsfunktionalität (118) zum Einführen einer kurzen Verzögerung zum Detektieren der Halteverletzung;
wobei die Registereinheit (115) mit der Langverzögerungsfunktionalität (116) und der Kurzverzögerungsfunktionalität (118) gekoppelt ist.

2. Elektronische Vorrichtung (100) nach Anspruch 1, wobei die Einrichtungsverletzung mindestens eines von Folgendem umfasst:
eine globale Unterspannung,
eine lokale Unterspannung,
einen Takt-Glitch.

3. Elektronische Vorrichtung (100) nach Anspruch 1, wobei die Halteverletzung mindestens eines von Folgendem umfasst:
eine globale Überspannung,
eine lokale Überspannung.

4. Elektronische Vorrichtung (100) nach Anspruch 1,
wobei die Registereinheit (115) ein D-Flip-Flop umfasst.

5. Elektronische Vorrichtung (100) nach einem der vorhergehenden Ansprüche,
wobei der Detektor (110) ein erster Detektor (110) ist und wobei die elektronische Vorrichtung (100) ferner umfasst:
einen zweiten Detektor (111), der mit der Evaluierungsvorrichtung (120) gekoppelt ist;
wobei der erste Detektor (110) räumlich von dem zweiten Detektor (111) getrennt ist.

6. Elektronische Vorrichtung (100) nach Anspruch 5, wobei die Evaluierungsvorrichtung (120) ausgelegt ist zum:
Vergleichen des Überwachungsergebnisses des ersten Detektors (110) und des Überwachungsergebnisses des zweiten Detektors (111), sodass der erste Detektor (110) als Referenz für den zweiten Detektor (111) verwendet wird oder umgekehrt.

7. Elektronische Vorrichtung (100) nach einem der vorhergehenden Ansprüche,
wobei die elektronische Vorrichtung (100) drei oder mehr Detektoren (110, 111) umfasst.

8. Elektronische Vorrichtung (100) nach einem der vorhergehenden Ansprüche,
wobei die Evaluierungsvorrichtung (120) einen Komparator (124) umfasst.

9. Elektronische Vorrichtung (100) nach einem der vorhergehenden Ansprüche, umfassend:
eine Bestimmungseinheit (125), die ausgelegt ist zum Analysieren eines Evaluierungsergebnisses der Evaluierungsvorrichtung (120), und
Bestimmen der Lokalisierung des Angriffs in der elektronischen Vorrichtung (100).

10. Verfahren zum Detektieren eines Fehlerinjektions- bzw. FI-Angriffs, das durch eine elektronische Vorrichtung (100) nach einem der vorhergehenden Ansprüche durchgeführt wird, wobei das Verfahren umfasst:
Überwachen der Leistungsversorgung und der Taktperiode innerhalb der elektronischen Vorrichtung (100);
Detektieren, über einen Detektor (110) und unter Verwendung einer Registereinheit (115), einer Einrichtungsverletzung als eine Timing-Verletzung;
Einführen einer langen Verzögerung zum Detektieren der Einrichtungsverletzung;
Detektieren, über einen Detektor (110) und unter Verwendung der Registereinheit (115), einer Halteverletzung als die Timing-Verletzung;
Einführen einer kurzen Verzögerung zum Detektieren der Halteverletzung;
und
Evaluieren, durch eine mit dem Detektor (110) gekoppelte Evaluierungsvorrichtung (120), des Überwachungsergebnisses in Bezug auf die durch den Angriff verursachte Timing-Verletzung.

## Revendications

1. Dispositif électronique (100), comprenant :
un détecteur (110), configuré pour surveiller une alimentation électrique et une période d'horloge au sein du dispositif électronique (100),
le détecteur (110) étant configuré pour détecter une violation d'établissement comme étant une violation temporelle,
le détecteur (110) étant configuré pour détecter une violation de maintien comme étant la violation temporelle, et
le détecteur (110) comprenant une unité de registre (115) destinée à la surveillance ;
un dispositif d'évaluation (120), couplé au détecteur (110), et configuré pour évaluer le résultat de la surveillance au regard d'une violation temporelle provoquée par une attaque ;
une fonctionnalité de retard long (116) destinée à introduire un retard long pour la détection de la violation d'établissement ; et
une fonctionnalité de retard court (118) destinée à introduire un retard court pour la détection de la violation de maintien ;
l'unité de registre (115) étant couplée à la fonctionnalité de retard long (116) et à la fonctionnalité de retard court (118).

2. Dispositif électronique (100) selon la revendication 1, dans lequel la violation d'établissement comprend au moins l'un des éléments suivants :
une sous-tension globale,
une sous-tension locale,
une perturbation transitoire d'horloge.

3. Dispositif électronique (100) selon la revendication 1, dans lequel la violation de maintien comprend au moins l'un des éléments suivants :
une surtension globale,
une surtension locale.

4. Dispositif électronique (100) selon la revendication 1,
dans lequel l'unité de registre (115) comprend une bascule D.

5. Dispositif électronique (100) selon l'une des revendications précédentes,
dans lequel le détecteur (110) est un premier détecteur (110), et le dispositif électronique (100) comprenant en outre :
un deuxième détecteur (111) couplé au dispositif d'évaluation (120) ;
dans lequel le premier détecteur (110) est séparé spatialement du deuxième détecteur (111).

6. Dispositif électronique (100) selon la revendication 5, dans lequel le dispositif d'évaluation (120) est configuré pour :
comparer le résultat de la surveillance du premier détecteur (110) et le résultat de la surveillance du deuxième détecteur (111), de sorte que le premier détecteur (110) soit utilisé comme référence pour le deuxième détecteur (111) ou inversement.

7. Dispositif électronique (100) selon l'une des revendications précédentes,
dans lequel le dispositif électronique (100) comprend au moins trois détecteurs (110, 111).

8. Dispositif électronique (100) selon l'une des revendications précédentes,
dans lequel le dispositif d'évaluation (120) comprend un comparateur (124).

9. Dispositif électronique (100) selon l'une des revendications précédentes, comprenant :
une unité de détermination (125), configurée pour
analyser un résultat d'évaluation de le dispositif d'évaluation (120), et
déterminer la localisation de l'attaque dans le dispositif électronique (100).

10. Procédé de détection d'une attaque par injection de fautes, FI, réalisé par un dispositif électronique (100) selon l'une des revendications précédentes, le procédé comprenant :
la surveillance de l'alimentation électrique et de la période d'horloge au sein du dispositif électronique (100) ;
la détection, au moyen d'un détecteur (110) et à l'aide d'une unité de registre (115), d'une violation d'établissement comme étant une violation temporelle ;
l'introduction d'un retard long pour la détection de la violation d'établissement ;
la détection, au moyen d'un détecteur (110) et à l'aide de l'unité de registre (115), d'une violation de maintien comme étant la violation temporelle ;
l'introduction d'un retard court pour la détection de la violation de maintien ;
et
l'évaluation, par un dispositif d'évaluation (120) couplé au détecteur (110), du résultat de la surveillance au regard de la violation temporelle provoquée par l'attaque.
